Europäisches Patentamt

European Patent Office

Office européen des brevets

(11) Publication number: **0 218 392**
**B1**

(12) **EUROPEAN PATENT SPECIFICATION**

(45) Date of publication of patent specification: **09.05.90**

(21) Application number: **86307131.2**

(22) Date of filing: **16.09.86**

(51) Int. Cl.⁵: **B 41 J 2/35, G 01 D 15/10**

(54) **Power circuit for thermal head.**

(30) Priority: **19.09.85 JP 207283/85**

(43) Date of publication of application:
**15.04.87 Bulletin 87/16**

(45) Publication of the grant of the patent:
**09.05.90 Bulletin 90/19**

(84) Designated Contracting States:
**BE DE FR GB NL**

(56) References cited:
**DE-A-3 139 321**
**US-A-4 496 824**
**US-A-4 563 691**

(73) Proprietor: **TOKYO ELECTRIC CO., LTD.**
**6-13, 2-chome, Nakameguro**
**Meguro-ku Tokyo (JP)**

(72) Inventor: **Ichikawa, Takashi**
**141-1 Nagabuse Mishima**
**Shizuoka (JP)**
Inventor: **Iida, Yoshinori**
**3451-4, Shuzenji Shuzenji-cho**
**Tagata Shizuoka (JP)**
Inventor: **Uematsu, Katsumi**
**894, Hara Numazu**
**Shizuoka (JP)**
Inventor: **Tajima, Noriyasu**
**2-47 Higashi-cho Mishima**
**Shizuoka (JP)**

(74) Representative: **Stebbing, Peter John Hunter**
**et al**
**F.J. CLEVELAND & COMPANY 40-43, Chancery**
**Lane**
**London WC2A 1JQ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

### Field of the invention and related art statement

The present invention relates to a thermal printer for conducting heat transfer printing, and more particularly to a power circuit for a thermal head which may supply a constant voltage to the thermal head of the thermal printer (as for example, in DE—A—3 139 321.

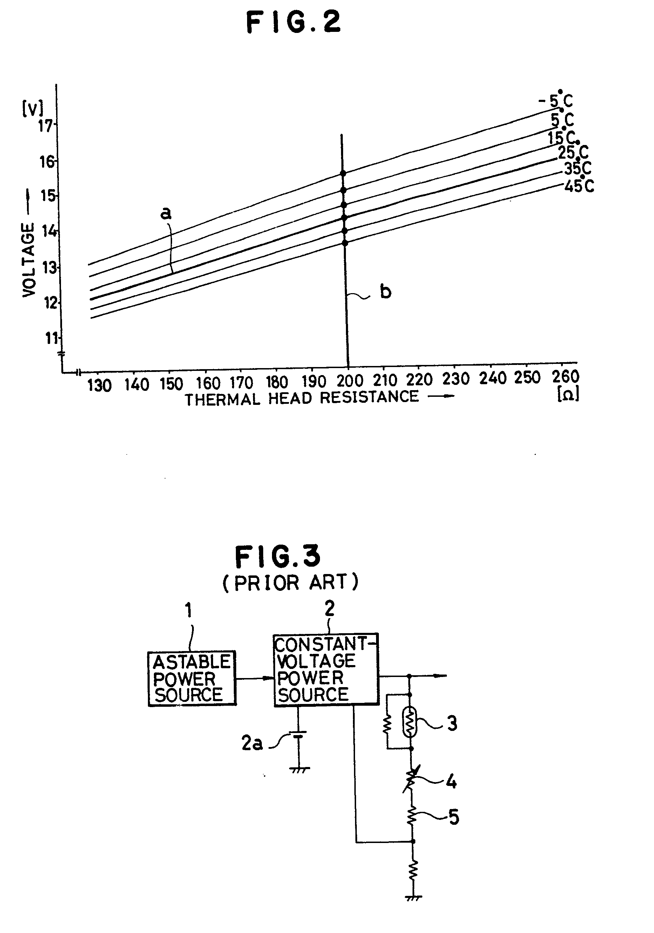

Fig. 3 shows an exemplary power circuit for a thermal head in the prior art. As shown in Fig. 3, there is provided a constant-voltage power source 2 connected to an astable power source 1. The constant-voltage power source 2 is connected to a thermal head (not shown). A thermistor 3 for detecting temperature of the thermal head is connected at a connection mid-point between the constant-voltage power source 2 and the thermal head. The thermistor 3 is connected in series with a semi-fixed resistor 4 and a temperature correction resistor 5 connected in series with the semi-fixed resistor 4. The resistor 5 is connected to the constant-voltage power source 2 at the other end. Thusly, a constant level voltage is supplied to the thermal head by the constant-voltage power source 2 on the basis of a reference power of a battery 2a of the constant-voltage power source 2. At this time, resistance of the thermistor 3 is changed according to temperature of the thermal head. Accordingly, the temperature of the thermal head and voltage to be applied to the thermal head are regulated to thereby maintain the temperature of the thermal head constant. In the case of freely setting temperature of the thermal head, a relation between a change in temperature of the thermal head and resistance therof is collated with a table to adjust the semi-fixed resistor 4 and change the voltage to be applied to the thermal head.

However, the conventional power circuit as mentioned above has the following problems, that is, an operational problem and a functional problem. In the operational problem, there exist two points due to manual operation of the semi-fixed resistor 4. That is to say, there is a possibility that the semi-fixed resistor 4 is erroneously operated because of erroneous collation of the table. In the other point, the semi-fixed resistor 4 is difficult to finely adjust. Further, there also exist two points in the functional problem. First, since the thermistor 3 employed for the purpose of maintaining temperature of the thermal head constant is inaccurately operated originally, the temperature of the thermal head is easily changed. Secondly, in the case that a plurality of thermal heads are provided, it is necessary to independently provide power circuits for the thermal heads from the viewpoint of constitution of the power circuit. As a result, the number of parts is increased to render a structure complicated. Further, in the case that each of heat generating devices in the thermal head is independently controlled, it is necessary to similarly provide each power circuit for each of the heat generating devices.

### Object and summary of the invention

It is a first object of the present invention to provide a power circuit for a thermal head, which may automatically set an optimum supply voltage.

It is a second object of the present invention to provide a power circuit for a thermal head, which may securely maintain temperature of the thermal head as set once.

It is a third object of the present invention to provide a power circuit for a thermal head, which may allow common use of parts in the case that plural thermal heads or heat generating devices are independently controlled, without providing any completely independent circuits per each of the thermal heads or the heat generating devices. Accordingly the present invention is characterized by a power circuit for a thermal head (10) comprising: an astable power source (23), a constant voltage power source (22) voltage control means adapted to adjust the constant voltage power source in response to the temperature of the thermal printing head and a temperature sensor (12) for detecting the temperature of the thermal head, characterized by

a head resistance memory (11) for storing resistance of said thermal head as a digital signal;

a head voltage calculation circuit (20) for storing and summing a voltage corresponding to the resistance of said thermal head at a fixed normal temperature, and a voltage corresponding to a change in temperature of said thermal head;

a D/A converter (21) for converting an output from said head voltage calculation circuit (20) to a reference voltage; and in that the constant voltage power source (22) is adapted to generate a constant voltage based on said reference voltage for said thermal head (10).

Accordingly, a supply voltage to be applied to the thermal head is automatically regulated and the temperature of the thermal head is maintained at a constant value. Further, where a plurality of head resistance memories are provided in accordance with a plurality of thermal heads, and each of the head resistance memories is connected through each of gate circuits to the head voltage calculation circuit, and a control circuit for selectively opening and closing the gate circuits with a timing lag is connected to the gate circuits so as to control the plurality of thermal heads, any parts such as the head voltage calculation circuit and the constant-voltage power source may be used in common.

The invention will now be described, by way of illustration only with reference to the accompanying drawings:

Figure 1 is a general block diagram showing a preferred embodiment of the present invention;

Figure 2 is a graph showing a correlation between resistance of the thermal head and supply voltage with respect to various temperatures; and

Figure 3 is a circuit diagram of a power circuit in the prior art.

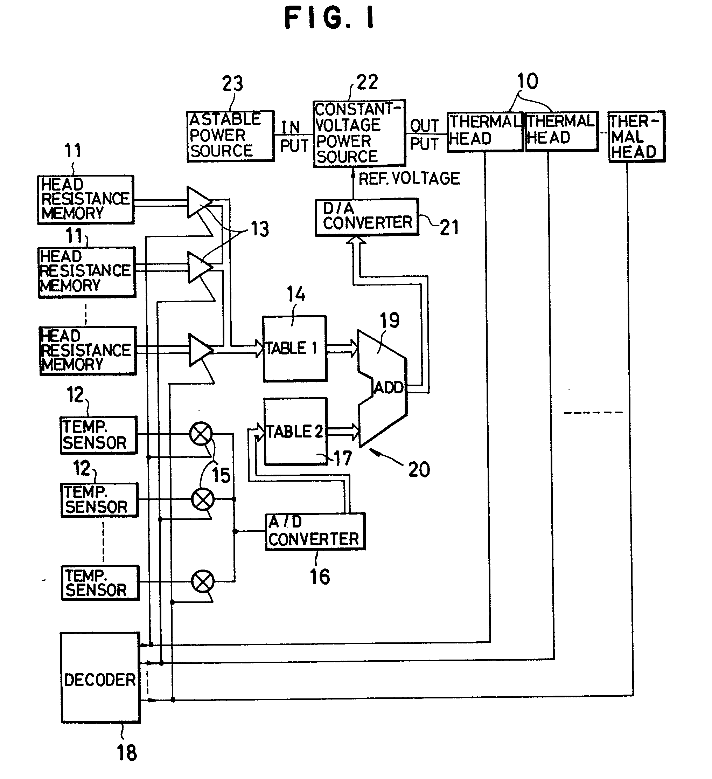

Referring to Figures 1 and 2 which a preferred embodiment of the present invention, there are provided a plurality of thermal heads 10, head resistance memories 11 for storing resistance of the thermal heads 10, and temperature sensors 12 for detecting temperature of the thermal heads 10. The head resistance memories 11 are connected through gate circuits 13 to an input side of a table$_1$ 14, and the temperature sensors 12 are connected through analog switches 15 as a gate circuit and an A/D converter 16 to an input side of a table$_2$ 17. A decoder 18 as a control circuit is provided to selectively open and close the gate circuits 13 and the analog switches 15. The decoder 18 is connected to the gate circuits 13 and the analog switches 15, and is also connected to the thermal heads 10. Each of output sides of the table$_1$ 14 and the table$_2$ 17 is connected to an input side of an adder 19. The adder 19, the table$_1$ 14 and the table$_2$ 17 constitute a head voltage calculation circuit 20, which will be hereinafter described in detail. An output side of the head voltage calculation circuit 20, that is, an output side of the adder 19 is connected through a D/A converter 21 to an input side of a constant-voltage power source 22. The constant-voltage power source 22 is supplied with voltage from an astable power source 23, and an output side of the constant-voltage power source 22 is connected to the thermal heads 10.

There will be now described details of the head voltage calculation circuit 20. The table$_1$ 14 stores voltage corresponding to resistance (e.g., about 130—260 Ω) of the thermal heads 10 at a fixed normal temperature (e.g., about 25°C), and generates the voltage as a supply voltage $V_{tr}$. On the other hand, the table$_2$ 17 stores an amount of change in the supply voltage corresponding to a change in temperature (e.g., −5 —45°C) of the thermal heads 10 at a reference resistance (e.g., 200 Ω) of the thermal heads 10, and generates the amount of change in the supply voltage as a voltage $V_t$. The adder 19 sums up the supply voltage $V_{tr}$ and the voltage $V_t$ to generate a total amount $V_h$.

With this arrangement, the thermal heads 10 are supplied with voltage from the astable power source 23 to generate heat. In the course of heat generation, the voltage applied to the thermal heads 10 is maintained at a constant level by the constant-voltage power source 22, thereby providing an ideal heat generating condition of the thermal heads 10, and controlling to maintain such a condition. In other words, the condition of the thermal heads 10 is detected by the head resistance memories 11 and the temperature sensors 12. A reference voltage according to the condition is formed by the head voltage calculation circuit 20 and the D/A converter 21, and is applied to the constant-voltage power source 22.

In operation, resistance of the thermal heads 10 is stored as a digital signal by the head resistance memories 11 corresponding to the respective thermal heads 10, and temperature of the thermal heads 10 is detected by the temperature sensors 12 corresponding to the respective thermal heads 10. If the gate circuits 13 and the analog switches 15 are open, these data are fed to the head voltage calculation circuit 20. Thus, the supply voltage $V_{tr}$ is obtained in the table$_1$ 14. At this time, the relation between the resistance of the thermal heads 10 and the supply voltage $V_{tr}$ is shown by a curved line a in Fig. 2. On the other hand, the voltage $V_t$ is obtained in the table$_2$ 17. At this time, the relation between the temperature of the thermal heads 10 and the voltage $V_t$ is plotted on a straight line b in Fig. 2. Then, the supply voltage $V_{tr}$ and the varied voltage $V_t$ are summed up by the adder 19. The output $V_h$ from the adder 19 is allowed to pass through the D/A converter 21, and is converted to a reference voltage. The reference voltage is applied to the constant-voltage power source 22 to regulate the voltage to be applied to the thermal heads 10. In this manner, the heat generating condition of the thermal heads 10 is automatically regulated to an ideal condition, and this ideal condition is automatically maintained. In addition, such automatic regulation and automatic maintenance are greatly accurately conducted since the correlation between resistance of the thermal heads 10 and voltage to be applied to the thermal heads 10 is invariant, and an error due to a change in temperature of the thermal heads 10 is corrected by adding an amount of the change in temperature of the thermal heads 10 to a detection result.

Signals for opening and closing the gate circuits 13 and the analog switches 15 are generated from the decoder 18. When the decoder 18 receives a select signal for selecting any of the thermal heads 10, it generates an opening/closing signal according to the select signal. Accordingly, the gate circuits 13 and the analog switches 15 are opened and closed with a timing lag per each of the corresponding thermal heads 10. Accordingly, it is not necessary to provide independent power circuits for the plurality of thermal heads 10, and particularly, it is possible to use any parts such as the constant-voltage power source 22 to thereby render a structure simple.

In a modified embodiment, the head resistance memories may be provided for a plurality of heat generating devices (not shown) in a single thermal head 10 to independently control each of the heat generating devices.

## Claims

1. A power circuit for a thermal head (10) comprising: an astable power source (23), a constant voltage power source (22), voltage control means adapted to adjust the constant voltage power source in response to the temperature of the thermal printing head and a temperature sensor (12) for detecting the temperature of the thermal head, characterized by

a head resistance memory (11) for storing resistance of said thermal head as a digital signal;

a head voltage calculation circuit (20) for storing and summing a voltage corresponding to the resistance of said thermal head at a fixed normal temperature, and a voltage corresponding to a change in temperature of said thermal head;

a D/A converter (21) for converting an output from said head voltage calculation circuit (20) to a reference voltage; and in that the constant voltage power source (22) is adapted to generated a constant voltage based on said reference voltage for said thermal head (10).

2. A power circuit according to claim 1 characterized in that the head voltage calculation circuit (20) is adapted to store correlation between temperature at a reference resistance of said thermal head and the supply voltage, and calculate an output according to data in said head resistance memory and an output from said A/D converter (16).

3. A power circuit according to claim 1, characterized by a plurality of head resistance memories (11) for storing resistances of a plurality of thermal heads (10);

a plurality of temperature sensors (12) for detecting temperatures of said thermal heads (10);

an A/D converter (16) for converting an output from said temperature sensors;

a head voltage calculation circuit (20) for storing a correlation between reistances of said thermal heads at a fixed normal temperature and supply voltages, storing a correlation between temperatures at a reference resistance of said thermal heads and the supply voltage, and calculating an output according to data in said head resistance memories (11) and to an output from said A/D converter (16);

a plurality of gate circuits (13) provided in said head voltage calculation circuit (20), said head resistance memories (11) and said temperature sensors (12); and

a control circuit for selectively opening and closing said gate circuits.

4. A power circuit according to claim 3 characterized in that a head selecting signal for a selecting operation of said thermal heads is fed to said control signal to selectively open or close said gate circuits (13).

5. A power circuit according to claim 3 or 4 characterized in that said constant-voltage power source (22) is singly provided for use in common by a plurality of thermal heads.

**Patentansprüche**

1. Kraftstromkreis für einen Thermokopf (10), enthaltend: eine astabile Stromquelle (23), eine Konstantspannungskraftquelle (22), eine Spannungsregeleinrichtung, die dazu eingerichtet ist, die Konstantspannungskraftquelle in Abhängigkeit von der Temperatur des Thermodruckkopfes einzusellen, und einen Temperatursensor (12) zum Ermitteln der Temperatur des Thermokopfes, gekennzeichnet durch

einen Kopfwiderstandsspeicher (11) zum Speichern des Widerstandes des Thermokopfes als ein digitales Signal;

eine Kopfspannungsrechenschaltung (20) zum Speichern und Summieren einer Spannung, die dem Widerstand des Thermokopfes bei einer festen Normaltemperatur entspricht, und einer Spannung, die einer Temperaturänderung des Thermokopfes entspricht;

einen D/A-Wandler (21) zum Umwandeln eines Ausgangs der Kopfspannungsrechenschaltung (20) in eine Bezugsspannung; und daß die Konstantspannungskraftquelle (22) dazu eingerichtet ist, eine konstante Spannung auf der Grundlage der Bezugsspannung für den Thermokopf (10) zu erzeugen.

2. Kraftstromkreis nach Anspruch 1, dadurch gekennzeichnet, daß die Kopfspannungsrechenschaltung (20) dazu eingerichtet ist, die Korrelation zwischen der Temperatur und einem Bezugswiderstand des Thermokopfes und die Versorgungsspannung zu speichern und einen Ausgang entsprechend Daten in dem Kopfwiderstandsspeicher und eines Ausgangs vom A/D-Wandler (16) zu berechnen.

3. Kraftstromkreis nach Anspruch 1, gekennzeichnet, durch mehrere Kopfwiderstandsspeicher (11) zum Speichern von Widerständen von mehreren Thermoköpfen (10);

eine Mehrzahl von Temperatursensoren (12) zum Ermitteln von Temperaturen der genannten Thermoköpfe (10);

einen A/D-Wandler (16) zum Umwandeln eines Ausgangs der Temperatursensoren;

eine Kopfspannungsrechenschaltung (20) zum Speichern einer Korrelation zwischen Widerständen der genannten Thermoköpfe bei einer festen Normaltemperatur und Versorgungsspannungen, zum Speichern einer Korrelation zwischen Temperaturen bei einem Bezugswiderstand der Thermoköpfe und der Versorgungsspannung, und zum Berechnen eines Ausgangs entsprechend Daten in den Kopfwiderstandsspeichern (11) und eines Ausgangs von dem A/D-Wandler (16);

mehrere Torschaltungen (13), die in der Kopfspannungsrechenschaltung (20), den Kopfwiderstandsspeichern (11) und den Temperatursensoren (12) enthalten sind; und

eine Steuerschaltung zum wahlweisen öffnen und Schließen der Torschaltungen.

4. Kraftstromkreis nach Anspruch 3, dadurch gekennzeichnet, daß ein Kopfwählsignal für einen Auswählbetrieb der Thermoköpfe dem Steuersignal zugeführt wird, um die Torschaltungen (13) wahlweise zu öffnen oder zu schließen.

5. Kraftstromkreisnach Anspruch 3 oder 4, dadurch gekennzeichnet, daß die Konstantspannungskraftquelle (22) als Einzeleinheit für die gemeinsame Verwendung durch eine Mehrzahl von Thermoköpfen vorgsehen ist.

**Revendications**

1. Un circuit de puissance pour une tête thermique (10) comprenant: une source de puissance instable (23), une source de puissance à tension constante (22), un moyen de commande de tension prévu pour régler la source de puissance à tension constante en réponse à la température de la tête d'impression thermique et un détecteur de température (12) pour détecter la température de la tête thermique, caractérisé par:

une mémoire de résistances de têtes (11) pour mémoriser une résistance de ladite tête thermique sous la forme d'un signal numérique;

un circuit de calcul de tensions des têtes (20) pour mémoriser et sommer une tension correspondant à la résistance de ladite tête thermique à une température fixe normale et une tension correspondant à une modification de température de ladite tête thermique;

un convertisséur N/A (21) pour convertir une sortie provenant dudit circuit de calcul de tensions de têtes (20) en une tension de référence, et en ce que la source de puissance à tension constante (22) est prévue pour produire une tension constante basée sur ladite tension de référence pour ladite tête thermique (10).

2. Un circuit de puissance selon la revendication 1, caractérisé en ce que le circuit de calcul de tensions de têtes (20) est prévu pour mémoriser une corrélation entre une température à une résistance de référence de ladite tête thermique et la tension d'alimentation, et pour calculer une sortie conforme à une donnée dans ladite mémoire de résistances de têtes et une sortie provenant dudit convertisseur A/N (16).

3. Un circuit de puissance selon la revendication 1, caractérisé par une pluralité de mémoires de résistances de têtes (11) pour mémoriser des résistances d'une pluralité de têtes thermiques (10);

une pluralité de détecteurs de température (12) pour détecter des températures desdites têtes thermiques (10);

un convertisseur A/N (16) convertir une sortie provenant desdits capteurs de température;

un circuit de calcul de tensions de têtes (20) pour mémoriser une corrélation entre des résistances desdites têtes thermiques à une température fixe normale et des tensions d'alimentation, mémorisant une corrélation entre des températures à une résistance de référence desdites têtes thermiques et la tension d'alimentation, et pour calculer une sortie conforme aux données dans lesdites mémoires de résistances de têtes (11) et vers une sortie à partir dudit convertisseur A/N (16);

une pluralité de circuits portes (13) prévue dans ledit circuit de calcul de tensions de têtes (20), lesdites mémoires de résistances de têtes (11) et lesdits détecteurs de température (12); et

un circuit de commande pour ouvrir et fermer sélectivement lesdits circuits portes.

4. Un circuit de puissance selon la revendication 3, caractérisé en ce qu'un signal de sélection de tête pour une opération de sélection desdites têtes thermiques est envoyé vers ledit signal de commande pour ouvrir et fermer sélectivement lesdits circuits portes (13).

5. Un circuit de puissance selon la revendication 3 ou 4, caractérisé en ce que ladite source de puissance à tension constante (22) est prévue de manière unique pour être utilisée en commun par une pluralité de têtes thermiques.

# FIG. 1

# FIG. 2

# FIG. 3
## (PRIOR ART)